# EUROPEAN PATENT APPLICATION

(11) **EP 4 682 776 A1**
(43) Date of publication of application: **21.01.2026**
(21) Application number: 24769687.5
(22) Date of filing: 04.02.2024
(51) Int. Cl.: G06N 5/04

(54) **INFERENCE METHOD AND SYSTEM FOR COMPUTATIONAL GRAPH, AND STORAGE MEDIUM**

(30) Priority: 16.03.2023 CN 202310269966
(71) Applicant: Cloud Intelligence Assets Holding (Singapore) Private Limited, Singapore 189554 (SG)
(72) Inventor: DING, Yu, Beijing 100102 (CN); LI, Peng, Beijing 100102 (CN); YOU, Liang, Beijing 100102 (CN)
(74) Representative: Barker Brettell LLP
(86) International application number: PCT/CN2024/075820
(87) International publication number: WO 2024/187991

(57) **Abstract**

This application discloses a computational graph inference method and system, and a storage medium. The method includes: monitoring a to-be-inferred original-type computational graph; in response to a failure in converting the monitored original-type computational graph into a corresponding target-type computational graph, dividing the original-type computational graph into first-level original-type computational subgraphs; converting the first-level original-type computational subgraph into at least one corresponding target-type computational graph; and generating a to-be-inferred file by using the target-type computational graph corresponding to the first-level original-type computational subgraph, and sending the to-be-inferred file to a remote device. A technical problem of low inference efficiency of computational graphs is resolved in this application.

## Description

This application claims priority to Chinese Patent Application No. 2023102699664, filed with the China National Intellectual Property Administration on March 16, 2023 and entitled "COMPUTATIONAL GRAPH INFERENCE METHOD AND SYSTEM, AND STORAGE MEDIUM", which is incorporated herein by reference in its entirety.

### TECHNICAL FIELD

This application relates to the field of cloud computing, and specifically, to a computational graph inference method and system, and a storage medium.

### BACKGROUND

Currently, when remote inference is performed, a dynamic computational graph usually needs to be converted into a static computational graph, to export a model file corresponding to the static computational graph, and finally, remote inference is performed on the model file. However, in many scenarios, the dynamic computational graph cannot be successfully converted into the static computational graph. Therefore, a user usually needs to manually modify the static computational graph to ensure successful conversion.

Therefore, when remote inference is performed, the dynamic computational graph cannot be directly converted into the static computational graph in many scenarios, which easily causes a technical problem of low efficiency of remote inference on computational graphs.

For the foregoing problem, no effective solution is provided at present.

### SUMMARY

Embodiments of this application provide a computational graph inference method and system, and a storage medium, to resolve at least the technical problem of low inference efficiency of computational graphs.

According to an aspect of the embodiments of this application, a computational graph inference method is provided. The method may include: monitoring a to-be-inferred original-type computational graph, where the original-type computational graph is a computational graph constructed and computed in a same time period; in response to a failure in converting the monitored original-type computational graph into a corresponding target-type computational graph, dividing the original-type computational graph into first-level original-type computational subgraphs, where the target-type computational graph is a computational graph respectively constructed and computed in different time periods; converting the first-level original-type computational subgraph into at least one corresponding target-type computational graph; and generating a to-be-inferred file by using the target-type computational graph corresponding to the first-level original-type computational subgraph, and sending the to-be-inferred file to a remote device, where the to-be-inferred file is a file provided to the remote device for inference.

According to another aspect of the embodiments of this application, a computational graph inference apparatus is further provided. The apparatus may include: a local device, configured to: monitor a to-be-inferred original-type computational graph, where the original-type computational graph is a computational graph constructed and computed in a same time period; a division module, configured to: in response to a failure in converting the monitored original-type computational graph into a corresponding target-type computational graph, divide the original-type computational graph into first-level original-type computational subgraphs, where the target-type computational graph is a computational graph respectively constructed and computed in different time periods; a conversion module, configured to: convert the first-level original-type computational subgraph into at least one corresponding target-type computational graph; and a sending module, configured to: generate a to-be-inferred file by using the target-type computational graph corresponding to the first-level original-type computational subgraph, and send the to-be-inferred file to a remote device, where the to-be-inferred file is a file provided to the remote device for inference.

According to another aspect of the embodiments of this application, a computational graph inference system is further provided. The system includes: a local device, configured to: monitor a to-be-inferred original-type computational graph, where the original-type computational graph is a computational graph constructed and computed in a same time period; in response to a failure in converting the monitored original-type computational graph into a corresponding target-type computational graph, divide the original-type computational graph into first-level original-type computational subgraphs, where the target-type computational graph is a computational graph respectively constructed and computed in different time periods; convert the first-level original-type computational subgraph into at least one corresponding target-type computational graph; and generate a to-be-inferred file by using the target-type computational graph corresponding to the first-level original-type computational subgraph; and a remote device, configured to: obtain the to-be-inferred file, and perform inference on the to-be-inferred file, to obtain an inference result.

According to another aspect of the embodiments of this application, a computer-readable storage medium is further provided. The computer-readable storage medium includes a stored program, where the program, when run by a processor, controls a device on which the computer-readable storage medium is disposed to perform the computational graph inference method.

It is easily noted that the foregoing general descriptions and the following detailed descriptions are merely used for exemplary and explanatory purposes of this application, and do not constitute a limitation on this application.

### BRIEF DESCRIPTION OF DRAWINGS

The accompanying drawings described herein are used to provide a further understanding of this application, and form a part of this application. Exemplary embodiments of this application and descriptions thereof are used to explain this application, and do not constitute any inappropriate limitation on this application. In the accompanying drawings:
FIG. 1 is a block diagram of a hardware structure of a computer terminal (or a mobile device) for implementing a computational graph inference method according to an embodiment of this application.
FIG. 2 is a structural block diagram of a computing environment of a computational graph inference method according to an embodiment of this application.
FIG. 3 is a structural block diagram of a service mesh according to an embodiment of this application.
FIG. 4 is a flowchart of a computational graph inference method according to an embodiment of this application.
FIG. 5 is a schematic diagram of a computational graph inference method according to an embodiment of this application.
FIG. 6 is a flowchart of another computational graph inference method according to an embodiment of this application.
FIG. 7 is a schematic diagram of a computational graph inference system according to an embodiment of this application.
FIG. 8 is a structural block diagram of a computational graph inference apparatus according to an embodiment of this application.
FIG. 9 is a structural block diagram of a computational graph computer terminal according to an embodiment of this application.

### DESCRIPTION OF EMBODIMENTS

In order to make a person skilled in the art better understand the solutions of this application, the following clearly and completely describes the technical solutions in the embodiments of this application with reference to the accompanying drawings in the embodiments of this application. Apparently, the described embodiments are only some of the embodiments of this application rather than all of the embodiments. All other embodiments obtained by a person of ordinary skill in the art based on the embodiments of this application without creative efforts shall fall within the protection scope of this application.

It should be noted that in this specification, claims, and accompanying drawings of this application, the terms "first", "second", and the like are intended to distinguish similar objects but do not necessarily indicate a specific order or sequence. It should be understood that such used data is interchangeable where appropriate so that the embodiments of this application described here can be implemented in an order other than those illustrated or described here. Moreover, the terms "include", "contain", and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, product, or device.

First, some nouns or terms appear in description of the embodiments of this application are explained below:
Computational graph: a directed acyclic graph for describing operations.

Original-type computational graph: a computational graph whose construction and computation are performed at the same time, for example, a dynamic computational graph.

Target-type computational graph: a computational graph whose construction and computation are separate, and whose entire operation flow is predefined, for example, a static computational graph.

First-level original-type computational subgraph: a subgraph of an original-type computational graph.

Second-level original-type computational subgraph: a subgraph of a first-level original-type computational subgraph.

Target operator: a basic unit for establishing an original-type computational graph.

Local inference: calling an application program interface (API for short) provided by a deep learning framework on a machine to perform computation of a constructed computational graph, where inference is also performed on the machine.

Remote inference: a user calls, on a local machine, an API provided by a remote inference framework, to implement an inference function, where a remote machine actually performs inference. Execution process of the remote inference: a local machine sends a computational graph to a remote machine through a network based on a remote inference framework, and sends an inference request of a user to the remote machine through the network; and the remote machine completes an inference operation based on the computational graph and the inference request of the user, and returns an inference result to the local machine through the network.

### Embodiment 1

According to an embodiment of this application, a computational graph inference method is provided. It should be noted that steps shown in the flowchart of the accompanying drawing may be performed in a computer system such as a group of computer-executable instructions. In addition, although a logic sequence is shown in the flowchart, in some cases, the shown or described steps may be performed in a sequence different from the sequence herein.

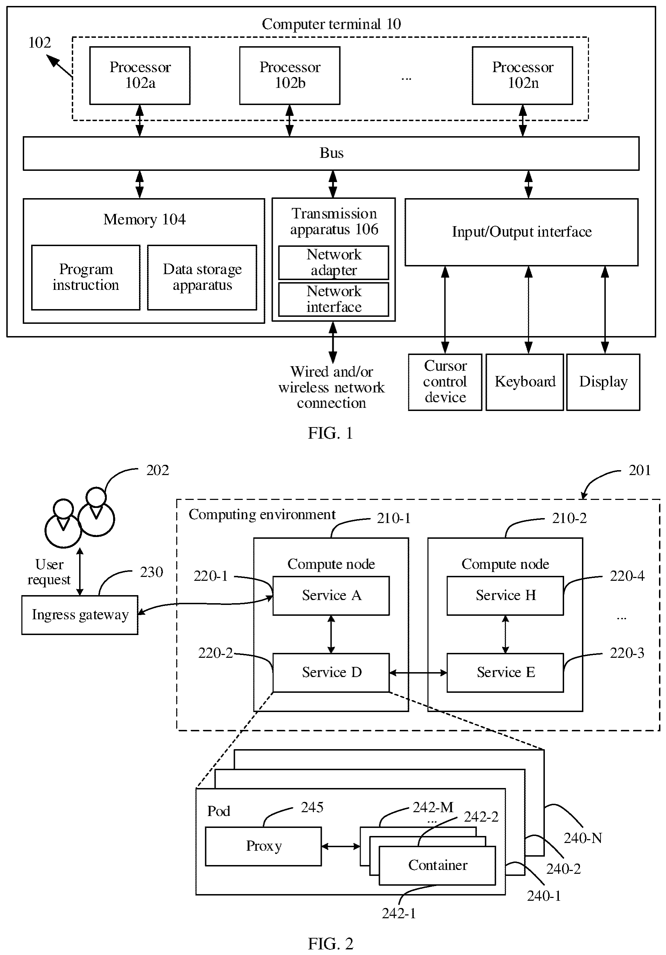

The method embodiment provided in Embodiment 1 of this application may be performed in a mobile terminal, a computer terminal, or a similar operation apparatus. FIG. 1 is a block diagram of a hardware structure of a computer terminal (or a mobile device) for implementing a computational graph inference method. As shown in FIG. 1, a computer terminal 10 (or mobile device) may include one or more (shown as 102a, 102b, ..., and 102n in the figure) processors 102 (the processor 102 may include, but is not limited to, a processing apparatus such as a micro controller unit (Micro Controller Unit, MCU) or a field programmable gate array (Field Programmable Gate Array, FPGA)), a memory 104 configured to store data, and a transmission module 106 configured to perform a communication function. In addition, the computer terminal 10 may further include: a display, an input/output (I/O) interface, a universal serial bus (Universal Serial Bus, USB) port (which may be included as one of ports of the bus), a network interface, a power supply, and/or a camera. A person of ordinary skill in the art may understand that the structure shown in FIG. 1 is merely illustrative instead of limiting the structure of the foregoing electronic apparatus. For example, the computer terminal 10 may alternatively include more or fewer components than those shown in FIG. 1, or has a configuration different from that shown in FIG. 1.

It should be noted that the one or more processors 102 and/or another data processing circuit may be generally referred to as a "data processing circuit" in this specification. All or a part of the data processing circuit may be implemented as software, hardware, firmware, or any other combination. In addition, the data processing circuit may be a single independent processing module, or all or a part of the data processing circuit may be combined into any one of other elements in the computer terminal 10 (or mobile device). As involved in this embodiment of this application, the data processing circuit is used as a type of control (for example, selection of terminal paths of a variable resistance connected to an interface) of the processor.

The memory 104 may be configured to store a software program and a module of application software, for example, the program instructions/data storage apparatus corresponding to the computational graph inference method in this embodiment of this application. The processor 102 runs the software program and module stored in the memory 104, to implement various functional applications and data processing, that is, to implement the foregoing computational graph inference method. The memory 104 may include a high-speed random memory, and may also include a non-volatile memory, for example, one or more magnetic storage apparatuses, a flash memory, or other non-volatile solid-state memory. In some example, the memory 104 may include memories remotely disposed relative to the processor 102, and the remote memories may be connected to the computer terminal 10 through a network. Examples of the network include, but are not limited to, the Internet, an intranet, a local area network, a mobile communication network, and a combination thereof.

The transmission apparatus 106 is configured to receive or send data through a network. Specific examples of the network may include a wireless network provided by a communication provider of the computer terminal 10. In an example, the transmission apparatus 106 includes a network interface controller (NIC), which may be connected to another network device through a base station to communicate with the Internet. In an example, the transmission apparatus 106 may be a radio frequency (RF) module, which is configured to communicate with the Internet in a wireless manner.

The display may be, for example, a touchscreen liquid crystal display (LCD), which enables a user to interact with a user interface of the computer terminal 10 (or mobile device).

The block diagram of the hardware structure shown in FIG. 1 not only may be used as an exemplary block diagram of the foregoing computer terminal 10 (or mobile device), but also may be used as an exemplary block diagram of the foregoing server. In an embodiment, FIG. 2 shows, by using a block diagram, an embodiment in which the computer terminal 10 (or mobile device) shown in FIG. 1 is used as a compute node in a computing environment 201. FIG. 2 is a structural block diagram of a computing environment of a computational graph inference method. As shown in FIG. 2, the computing environment 201 includes a plurality (shown as 210-1, 210-2, ... in the figure) of compute nodes (such as servers) running on a distributed network. The compute nodes all include local processing and memory resources, and a terminal user 202 may remotely run an application program or store data in the computing environment 201. The application program may be provided as a plurality of services 220-1, 220-2, 220-3, and 220-4, which respectively represent services "A", "D", "E", and "H", in the computing environment 201.

The terminal user 202 may provide and access a service by using a web browser or other software application program on a client. In some embodiments, a supply and/or a request of the terminal user 202 may be provided for an ingress gateway 230. The ingress gateway 230 may include a corresponding proxy to process the supply and/or the request for the service (one or more services provided in the computing environment 201).

The service is provided or deployed based on various virtualization technologies supported by the computing environment 201. In some embodiments, the service may be provided based on virtual machine (VM)-based virtualization, container-based virtualization, and/or a similar manner. The virtual machine-based virtualization may be simulating a real computer by initializing a virtual machine, and executing a program and an application program without directly accessing any actual hardware resource. While a virtual machine virtualizes a machine, according to the container-based virtualization, a container may be enabled to virtualize an entire operating system (OS), so that a plurality of workloads can run on a single operating system instance.

In an embodiment of container based virtualization, several containers of a service may be assembled into one workload container group (Pod) (for example, a Kubernetes Pod). For example, as shown in FIG. 2, the service 220-2 may be equipped with one or more Pods 240-1, 240-2, ..., and 240-N (collectively referred to as Pods). The Pod may include a proxy 245 and one or more containers 242-1, 242-2, ..., 242-M (collectively referred to as containers). One or more containers in the Pod process requests related to one or more corresponding functions of the service, and the proxy 245 generally controls network functions related to the service, such as routing and load balancing. Other service may also be equipped with a similar Pod.

In an operation process, executing a user request from the terminal user 202 may require calling one or more services in the computing environment 201, and executing one or more functions of a service may require calling one or more functions of another service. As shown in FIG. 2, the service "A" 220-1 receives a user request of the terminal user 202 from the ingress gateway 230, the service "A" 220-1 may call the service "D" 220-2, and the service "D" 220-2 may request the service "E" 220-3 to perform one or more functions.

The foregoing computing environment may be a cloud computing environment. Resource allocation is managed by a cloud service, allowing developing functions without considering implementation, adjustment, or extension of a server. The computing environment allows a developer to execute code of a response event without constructing or maintaining complex infrastructures. A service may be divided into a group of functions that can be automatically and independently scaled, instead of expanding a single hardware device to process a potential load.

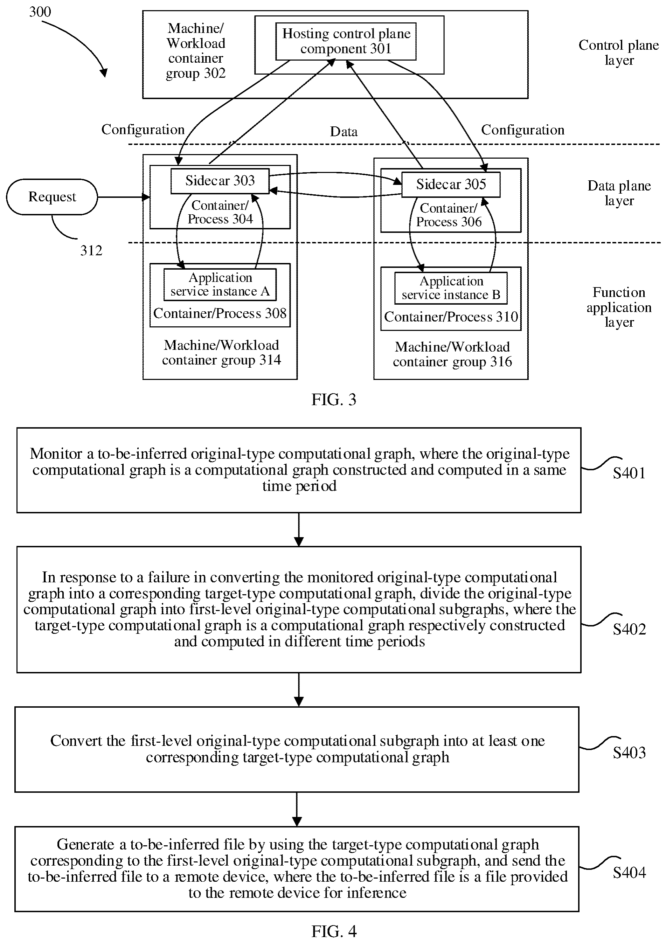

In another embodiment, FIG. 3 shows, by using a block diagram, an embodiment in which the computer terminal 10 (or mobile device) shown in FIG. 1 is used as a service mesh. FIG. 3 is a structural block diagram of a service mesh. As shown in FIG. 3, the service mesh 300 is mainly used for facilitating secure and reliable communication between a plurality of microservices. A microservice means that an application program is decomposed into a plurality of smaller services or instances that are distributed on different clusters/machines to run.

As shown in FIG. 3, the microservice may include an application service instance A and an application service instance B, and the application service instance A and the application service instance B form a function application layer of the service mesh 300. In an implementation, the application service instance A runs in a machine/workload container group 314 (Pod) in a form of a container/process 308, and the application service instance B runs in a machine/workload container group 316 (Pod) in a form of a container/process 310.

In an implementation, the application service instance A may be a commodity query service implemented by performing remote inference on a model file corresponding to a static computational graph, and the application service instance B may be a commodity ordering service implemented by performing remote inference on a model file corresponding to another static computational graph. The model file corresponding to the static computational graph may be obtained by using the computational graph inference method shown in FIG. 4 in the embodiments of this application.

As shown in FIG. 3, the application service instance A and a sidecar (sidecar) 303 coexist in a machine/workload container group 614, and the application service instance B and a sidecar 305 coexist in the machine/workload container 314. The sidecar 303 and the sidecar 305 form a data plane layer (data plane) of the service mesh 300. The sidecar 303 and the sidecar 305 respectively run in a form of a container/process 304 and a container/process 306, and can receive a request 312 for performing the commodity query service. In addition, the sidecar 303 and the application service instance A can perform bidirectional communication, and the sidecar 305 and the application service instance B can perform bidirectional communication. In addition, the sidecar 303 and the sidecar 305 may also perform bidirectional communication.

In an implementation, traffic of the application service instance A is routed to an appropriate destination through the sidecar 303, and network traffic of the application service instance B is routed to an appropriate destination through the sidecar 305. It should be noted that the network traffic mentioned herein includes, but is not limited to, forms such as the HyperText Transfer Protocol (HyperText Transfer Protocol, HTTP), the Representational State Transfer (Representational State Transfer, REST), a high-performance and general-purpose open-source framework (google Remote Procedure Call, gRPC), and a data structure storage system (such as a remote dictionary server (Remote Dictionary Server, Redis)) in an open-source memory.

In an implementation, the function of the data plane layer may be expanded by writing a custom filter for an envoy (Envoy) in the service mesh 300. The envoy of the service mesh may be configured for enabling the service mesh to correctly proxy service traffic, to implement service interconnection and service governance. The sidecar 303 and the sidecar 305 may be configured to perform at least one of the following functions: service discovery (service discovery), health checking (health checking), routing (Routing), load balancing (Load Balancing), authentication and authorization (authentication and authorization), and observability (observability).

As shown in FIG. 3, the service mesh 300 further includes a control plane layer. The control plane layer may be a group of services that run in a dedicated namespace, and these services are hosted by a hosting control plane component 301 in a machine/workload container group (machine/Pod) 302. As shown in FIG. 3, the hosting control plane component 301 performs bidirectional communication with the sidecar 303 and the sidecar 305. The hosting control plane component 301 is configured to perform some control management functions. For example, the hosting control plane component 301 receives telemetry data transmitted by the sidecar 303 and the sidecar 305, and may aggregate the telemetry data. For these services, the hosting control plane component 301 may further provide a user-oriented application programming interface (Application Programming Interface, API), to easily control a network behavior, provide configuration data for the sidecar 303 and the sidecar 305, and the like.

In the foregoing running environment, this application provides a computational graph inference method shown in FIG. 4. It should be noted that, the computational graph inference method in this embodiment may be performed by the computer terminal in the embodiment shown in FIG. 1, and may be applied to a local device. FIG. 4 is a flowchart of a computational graph inference method according to Embodiment 1 of this application. As shown in FIG. 4, the method may include the following steps.

Step S401: Monitor a to-be-inferred original-type computational graph, where the original-type computational graph is a computational graph constructed and computed in a same time period.

In the technical solution provided in step S401 of this application, a to-be-inferred original-type computational graph may be monitored. The original-type computational graph is a computational graph constructed and computed in a same time period. For example, the original-type computational graph may be a dynamic computational graph, which may be referred to as a dynamic graph.

In an implementation, after the to-be-inferred original-type computational graph is monitored, the original-type computational graph may be directly converted into a target-type computational graph by using an API provided by a deep learning framework. The target-type computational graph may be a static computational graph.

Step S402: In response to a failure in converting the monitored original-type computational graph into a corresponding target-type computational graph, divide the original-type computational graph into first-level original-type computational subgraphs, where the target-type computational graph is a computational graph respectively constructed and computed in different time periods.

In the technical solution provided in step S402 of this application, after the to-be-inferred original-type computational graph is monitored, type conversion may be performed on the monitored original-type computational graph. For example, type conversion from a dynamic computational graph to a static computational graph is performed on the monitored original-type computational graph. In response to the failure in converting the monitored original-type computational graph into the corresponding target-type computational graph, the original-type computational graph may be divided into the first-level original-type computational subgraphs.

In this embodiment, in many scenarios, the original-type computational graph cannot be directly converted into the target-type computational graph. For example, the original-type computational graph includes syntax specific to a computer programming language, namely, python, that can simply and effectively perform object-oriented programming, or input and output of the original-type computational graph do not belong to a type that can be supported by the deep learning framework. Therefore, in this case, an exception is automatically thrown by the API provided by the deep learning framework in the process of converting the original-type computational graph into the target-type computational graph. When it is detected that the API provided by the deep learning framework throws an exception, in other words, in response to the failure in converting the original-type computational graph into the corresponding target-type computational graph, then, the original-type computational graph may be divided into the first-level original-type computational subgraphs for conversion.

In an implementation, the target-type computational graph is a computational graph constructed and computed in different time periods, and may be a static computational graph, which may also be referred to as a static graph. Because the original-type computational graph may be a dynamic computational graph, the first-level original-type computational subgraph may be a first-level dynamic computational subgraph obtained by dividing the dynamic computational graph.

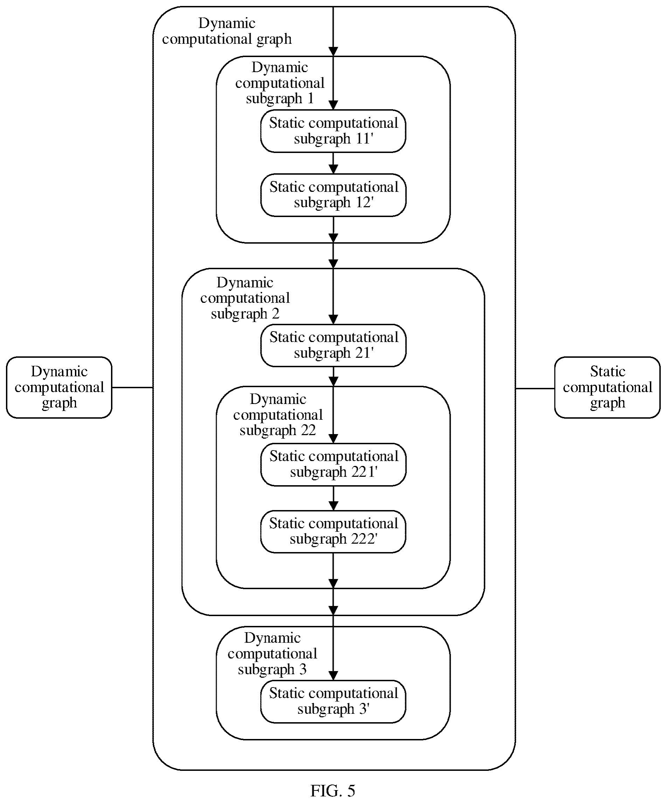

In an implementation, if the original-type computational graph satisfies a standard format of the deep learning framework, a type and a quantity of first-level original-type computational subgraphs obtained by dividing the original-type computational graph are determined. For example, if the original-type computational graph satisfies the standard format of the deep learning framework, first-level original-type computational subgraphs obtained by dividing the original-type computational graph may be a dynamic computational subgraph 1, a dynamic computational subgraph 2, and a dynamic computational subgraph 3 shown in FIG. 5. The example herein is merely exemplary, and does not constitute a limitation on the embodiments of this application.

Step S403: Convert the first-level original-type computational subgraph into at least one corresponding target-type computational graph.

In the technical solution provided in step S403 in this application, the first-level original-type computational subgraph may be converted into at least one corresponding target-type computational graph. For example, a dynamic computational subgraph may be converted into at least one corresponding static computational subgraph.

In this embodiment, after the original-type computational graph is divided into first-level original-type computational subgraphs, the first-level original-type computational subgraph may be converted into at least one corresponding target-type computational graph.

For example, as can be learned from the foregoing descriptions, the first-level original-type computational subgraph may be a first-level dynamic computational subgraph, and the target-type computational graph may be a static computational graph. Based on this, converting the first-level original-type computational subgraph into at least one corresponding target-type computational graph means converting the first-level dynamic computational subgraph into at least one corresponding static computational subgraph. If the first-level original-type computational subgraphs include the dynamic computational subgraph 1, the dynamic computational subgraph 2, and the dynamic computational subgraph 3 as shown in FIG. 5, the dynamic computational subgraph 3 may be converted into a corresponding static computational subgraph 3'.

Step S404: Generate a to-be-inferred file by using the target-type computational graph corresponding to the first-level original-type computational subgraph, and send the to-be-inferred file to a remote device, where the to-be-inferred file is a file provided to the remote device for inference.

In this embodiment, after the first-level original-type computational subgraph is converted into the at least one corresponding target-type computational graph, the to-be-inferred file may be generated by using the target-type computational graph corresponding to the first-level original-type computational subgraph, and the to-be-inferred file may be sent to the remote device, so that the remote device performs the inference operation based on the to-be-inferred file, to obtain an inference result.

In this embodiment, the to-be-inferred file may be a model file, where the model file may be binary data, and the remote device may be a remote computer terminal.

For example, after the first-level dynamic computational graph is converted into the corresponding at least one static computational subgraph, a model file may be generated by using the at least one static computational subgraph, and the model file is sent to the remote device. The remote device may deploy the model file, and load the model file to perform an inference operation, to obtain an inference result.

In an implementation, when remote inference is performed, an inference request may further be sent to the remote device. The inference request includes input data required for inference. After receiving the inference request, the remote device may load a model file to perform an inference operation in response to the inference request, to obtain an inference result.

In an implementation, after the remote device completes the inference operation and obtains the inference result, the remote device may further transmit the obtained inference result back to the local device, to feed back the inference result.

Based on the solution disclosed in the foregoing step S401 to step S404, by converting the original-type computational graph into the corresponding target-type computational graph, when the conversion fails, the original-type computational graph may be divided into first-level original-type computational subgraphs. Because the first-level original-type computational subgraph may be further divided into operators defined according to the deep learning framework, and the operator defined according to the deep learning framework can definitely be converted into the target-type computational graph, conversion is performed after the original-type computational graph is divided, to improve a success rate of conversion. After the first-level original-type computational subgraph is converted into at least one corresponding target-type computational graph, a to-be-inferred file may be generated by using the target-type computational graph corresponding to the first-level original-type computational subgraph, and the to-be-inferred file is sent to a remote device through a network, so that the remote device performs an inference operation based on the to-be-inferred file, to obtain an inference result. In this way, any dynamic computational graph can be converted into a static computational graph, to generate a to-be-inferred file for inference without manually modifying the static computational graph. An operation manner is simple, and an objective of converting any dynamic computational graph into the static computational graph for inference is achieved, thereby achieving a technical effect of improving inference efficiency of computational graphs, and further resolving the technical problem of low inference efficiency of computational graphs.

The following describes the foregoing method in this embodiment.

In an implementation, in step S403, the converting the first-level original-type computational subgraph into at least one corresponding target-type computational graph includes: performing at least one level of type conversion on the first-level original-type computational subgraph, to obtain the at least one corresponding target-type computational graph.

In this embodiment, at least one level of type conversion is performed on the first-level original-type computational subgraph in a recursive manner, until at least one corresponding target-type computational graph can be successfully obtained.

In this embodiment, the process of performing at least one level of type conversion on the first-level original-type computational subgraph in the recursive manner is as follows: performing first-level type conversion on the first-level original-type computational subgraph; if at least one corresponding target-type computational graph can be successfully obtained, stopping the conversion, and directly generating a model file corresponding to the target-type computational graph; or if the corresponding target-type computational graph cannot be obtained by performing first-level type conversion on the first-level original-type computational subgraph, dividing the first-level original-type computational subgraph into second-level original-type computational subgraphs, determining the second-level original-type computational subgraph as a new first-level original-type computational subgraph, and further performing first-level type conversion on the new first-level original-type computational subgraph, until a corresponding target-type computational graph can be successfully obtained.

For example, as shown in FIG. 5, a corresponding static computational subgraph 3' can be obtained by performing type conversion on a dynamic computational subgraph 3, and a corresponding static computational subgraph cannot be obtained by performing type conversion on a dynamic computational subgraph 2. In this case, the dynamic computational subgraph 2 may be further divided, to obtain a dynamic computational subgraph 21 and a dynamic computational subgraph 22 corresponding to the dynamic computational subgraph 2, and then type conversion is performed on the dynamic computational subgraph 21 and the dynamic computational subgraph 22, to obtain a static computational subgraph 21' and a static computational subgraph 22'.

In this embodiment, at least one level of type conversion is performed on the first-level original-type computational subgraph, to obtain the at least one corresponding target-type computational graph. Conversion can be attempted for a plurality of times in the recursive manner, until the dynamic computational subgraph is successfully converted into the corresponding static computational subgraph, to generate the to-be-inferred file by using the static computational subgraph, and enable a remote terminal device to perform an inference operation based on the to-be-inferred file, to obtain an inference result without manually modifying the static computational graph, thereby improving inference efficiency of computational graphs.

In an implementation, the at least one level of type conversion is performed on the first-level original-type computational subgraph, to obtain at least one corresponding target-type computational graph includes: a conversion step of performing type conversion on the first-level original-type computational subgraph; a determining step of determining whether the first-level original-type computational subgraph is successfully converted into the corresponding target-type computational graph; a division step of, in response to a failure in converting the first-level original-type computational subgraph into the corresponding target-type computational graph, dividing the first-level original-type computational subgraph into second-level original-type computational subgraphs, and determining the second-level original-type computational subgraph as the first-level original-type computational subgraph, and returning to the conversion step; and an obtaining step of, in response to a success in converting the first-level original-type computational subgraph into the corresponding target-type computational graph, obtaining the target-type computational graph corresponding to the first-level original-type computational subgraph.

In this embodiment, the second-level original-type computational subgraph is a subgraph of a first-level original-type computational subgraph. Conversion is performed on the first-level original-type computational subgraph, and whether the conversion succeeds is determined. When the conversion fails, the first-level original-type computational subgraph is divided into second-level original-type computational subgraphs, the second-level original-type computational subgraph is determined as a first-level original-type computational subgraph, and the process returns to the conversion step, to convert the re-determined first-level original-type computational subgraph. When the conversion fails, the re-determined first-level original-type computational subgraph is divided again into second-level original-type computational subgraphs, the second-level original-type computational subgraph is determined as a first-level original-type computational subgraph, and the process returns to the conversion step again. Based on this, at least one level of type conversion is performed on the first-level original-type computational subgraph in the recursive manner, until the first-level original-type computational subgraph is successfully converted into the corresponding target-type computational graph, to obtain the target-type computational graph corresponding to the first-level original-type computational subgraph.

For example, as shown in FIG. 5, conversion is performed on the dynamic computational subgraph 2, and whether the dynamic computational subgraph 2 is successfully converted into a corresponding static computational subgraph is determined. When the conversion fails, the dynamic computational subgraph 2 may be divided into a dynamic computational subgraph 21 and a dynamic computational subgraph 22. The dynamic computational subgraph 21 and the dynamic computational subgraph 22 are determined as first-level dynamic computational subgraphs, and the process returns to the conversion step, to perform conversion on the dynamic computational subgraph 21 and the dynamic computational subgraph 22. If the dynamic computational subgraph 21 is successfully converted into a corresponding static computational subgraph 21', and conversion of the dynamic computational subgraph 22 into a corresponding static computational subgraph fails, the dynamic computational subgraph 22 is further divided into a dynamic computational subgraph 221 and a dynamic computational subgraph 222. The dynamic computational subgraph 221 and the dynamic computational subgraph 222 are determined as first-level dynamic computational subgraphs, and the process returns to the conversion step, to perform conversion on the dynamic computational subgraph 221 and the dynamic computational subgraph 222, until the dynamic computational subgraph 221 is successfully converted into a corresponding static computational subgraph 221', and the dynamic computational subgraph 222 is successfully converted into a corresponding static computational subgraph 222'.

In this embodiment, at least one level of type conversion is performed on the first-level original-type computational subgraph in the recursive manner, until the first-level original-type computational subgraph is successfully converted into the corresponding target-type computational graph, so that the target-type computational graph corresponding to the first-level original-type computational subgraph can be obtained. Conversion can be attempted for a plurality of times in the recursive manner, until the dynamic computational subgraph is successfully converted into the static computational subgraph, thereby avoiding a problem that the dynamic computational graph cannot be converted into the static computational graph. In addition, the static computational graph does not need to be manually modified, thereby improving the inference efficiency of computational graphs.

In an implementation, the original-type computational graph is established by using a target operator, and the target operator is used for successful conversion into the corresponding target-type computational graph. After the dividing the first-level original-type computational subgraph into second-level original-type computational subgraphs, the computational graph inference method further includes: in response to the second-level original-type computational subgraph being the target operator, obtaining the target-type computational graph that the target operator is successfully converted into, and stopping performing the following step: determining the second-level original-type computational subgraph as the first-level original-type computational subgraph.

In this embodiment, the target operator is a basic unit for establishing an original-type computational graph, may be a basic unit for establishing a dynamic computational graph, and may include an operator and a basic operation defined by the deep learning framework. The basic operation may include addition, subtraction, multiplication, and division. Based on this, when an original-type computational subgraph is divided into target operators, the target operator can be successfully converted into a static computational graph. Therefore, when the second-level original-type computational subgraph is a target operator, because the target operator can be converted into the target-type computational graph, the target-type computational graph that the target operator is successfully converted into can be directly obtained, and the second-level original-type computational subgraph does not need to be further determined as the first-level original-type computational subgraph.

For example, as shown in FIG. 5, when the dynamic computational subgraph 1 cannot be converted into a corresponding static computational subgraph, the dynamic computational subgraph 1 may be divided into a dynamic computational subgraph 11 and a dynamic computational subgraph 12. When the dynamic computational subgraph 11 and the dynamic computational subgraph 12 are operators defined by the deep learning framework, a static computational subgraph 11' and a static computational subgraph 12' into which the dynamic computational subgraph 11 and the dynamic computational subgraph 12 are successfully converted can be directly obtained, and the dynamic computational subgraph 11 and the dynamic computational subgraph 12 do not need to be further determined as first-level dynamic computational subgraphs.

In this embodiment, the dynamic computational subgraph is divided for a plurality of times, to obtain a plurality of levels of dynamic computational subgraphs. When the dynamic computational subgraph is divided to the innermost layer, that is, when the dynamic computational subgraph is divided into a plurality of operators defined by the deep learning framework, the plurality of operators defined by the deep learning framework can be directly converted into corresponding static computational subgraphs, so that any dynamic computational graph can be converted into a static computational graph, thereby avoiding the problem that the dynamic computational graph cannot be converted into the static computational graph.

In an implementation, the computational graph inference method further includes: constructing the target operator based on a deep learning framework, where the deep learning framework is used for converting the target operator into the corresponding target-type computational graph.

In this embodiment, the target operator may be constructed based on the deep learning framework, where the deep learning framework is used for converting the target operator into the corresponding target-type computational graph.

For example, when the target operator is converted into the corresponding static computational subgraph, the deep learning framework may be used for the conversion operation.

In an implementation, in step S403, the convert the first-level original-type computational subgraph into at least one corresponding target-type computational graph includes: converting the first-level original-type computational subgraph into at least one corresponding target-type computational graph based on an interface provided by the deep learning framework.

In this embodiment, the first-level original-type computational subgraph may be converted into at least one corresponding target-type computational graph based on the interface provided by the deep learning framework.

For example, when a dynamic computational subgraph is converted into a static computational subgraph, conversion may be implemented by using the interface provided by the deep learning framework.

In an implementation, the original-type computational graph is converted into the corresponding target-type computational graph based on the interface provided by the deep learning framework.

In this embodiment, the original-type computational graph is converted into the corresponding target-type computational graph based on the interface provided by the deep learning framework.

For example, a dynamic computational graph may be converted into a corresponding static computational graph by using the interface provided by the deep learning framework.

In an implementation, it is determined, based on exception prompt information outputted by the deep learning framework, that the converting the monitored original-type computational graph into the corresponding target-type computational graph fails.

In this embodiment, it may further be determined, based on the exception prompt information outputted by the deep learning framework, that the converting the monitored original-type computational graph into the corresponding target-type computational graph fails.

For example, when conversion of the dynamic computational graph into the static computational graph by using the interface provided by the deep learning framework fails, exception prompt information is automatically outputted inside the interface of the deep learning framework, so that it can be determined, based on the exception prompt information, that the conversion of the dynamic computational graph into the static computational graph fails.

In an implementation, in step S402, the dividing the original-type computational graph into first-level original-type computational subgraphs includes: dividing the original-type computational graph into the first-level original-type computational subgraphs based on a format corresponding to the deep learning framework, where the original-type computational graph and the first-level original-type computational subgraphs satisfy the format corresponding to the deep learning framework.

In this embodiment, the original-type computational graph may be divided into the first-level original-type computational subgraphs based on the format corresponding to the deep learning framework, where the original-type computational graph and the first-level original-type computational subgraphs satisfy the format corresponding to the deep learning framework.

For example, when the dynamic computational graph satisfies the format corresponding to the deep learning framework, the dynamic computational graph can be divided into first-level dynamic computational subgraphs based on the format corresponding to the deep learning framework. The first-level dynamic computational subgraph also satisfies the format corresponding to the deep learning framework.

In an implementation, in response to a success in converting the monitored original-type computational graph into the corresponding target-type computational graph, the to-be-inferred file is generated by using the converted target-type computational graph.

In this embodiment, when the monitored original-type computational graph is successfully converted into the corresponding target-type computational graph, the to-be-inferred file may be generated by using the converted target-type computational graph.

For example, when the dynamic computational graph is successfully converted into the corresponding static computational graph, a model file may be generated by using the static computational graph, and then the model file may be sent to a remote computer through a network, so that the remote computer performs an inference operation based on the model file, to obtain an inference result.

In the foregoing steps, by converting the original-type computational graph into the corresponding target-type computational graph, when the conversion fails, the original-type computational graph may be divided into first-level original-type computational subgraphs. Because the first-level original-type computational subgraph may be further divided into operators defined according to the deep learning framework, and the operator defined according to the deep learning framework can definitely be converted into the target-type computational graph, conversion is performed after the original-type computational graph is divided, to improve a success rate of conversion. After the first-level original-type computational subgraph is converted into at least one corresponding target-type computational graph, a to-be-inferred file may be generated by using the target-type computational graph corresponding to the first-level original-type computational subgraph, and the to-be-inferred file is sent to a remote device through a network, so that the remote device performs an inference operation based on the to-be-inferred file, to obtain an inference result. In this way, any dynamic computational graph can be converted into a static computational graph, to generate a to-be-inferred file for inference without manually modifying the static computational graph. An operation manner is simple, and an objective of converting any dynamic computational graph into the static computational graph for inference is achieved, thereby achieving a technical effect of improving inference efficiency of computational graphs, and further resolving the technical problem of low inference efficiency of computational graphs.

It should be noted that, user information (including but not limited to user equipment information, user personal information, and the like) and data (including but not limited to data for analysis, stored data, displayed data, and the like) in this application are all information and data that are authorized by a user or that are fully authorized by all parties, and related data needs to be collected, used, and processed by complying with relevant laws, regulations, and standards of relevant countries and regions. In addition, a corresponding operation entry is provided for the user to select to authorize or reject.

It should be noted that, for brief description, the foregoing method embodiments are represented as a series of action combinations. However, a person skilled in the art should appreciate that this application is not limited to the described order of the actions, because according to this application, some steps may be performed in other orders or simultaneously. In addition, a person skilled in the art should also know that each embodiment described in the specification is a type of embodiment, and the related actions and modules are not necessarily mandatory to this application.

According to the descriptions in the foregoing implementations, a person skilled in the art may clearly learn that the method according to the foregoing embodiment may be implemented by relying on software and a commodity hardware platform or by using hardware. Based on such understanding, the technical solutions of this application essentially or some contributing to the existing technology may be implemented in a form of a software product. The computer software product is stored in a storage medium (such as a read-only memory (ROM)/random access memory (RAM), a magnetic disk, or an optical disc) and includes several instructions for instructing a terminal device (which may be a mobile phone, a computer, a server, a network device, or the like) to perform the methods described in the embodiments of this application.

### Embodiment 2

The following describes implementations of the foregoing method in the embodiments.

Currently, when remote inference is performed by using a deep learning framework, a dynamic computational graph usually needs to be converted into a static computational graph to export a model file, and finally, remote inference is performed. However, in many scenarios, the dynamic computational graph cannot be successfully converted into the static computational graph. For example, when the dynamic computational graph includes syntax specific to python, or input and output of the dynamic computational graph do not belong to a type that can be supported by the deep learning framework, the dynamic computational graph cannot be successfully converted into the static computational graph.

In the related technology, when a dynamic computational graph cannot be converted into a static computational graph, a commonly used solution is that a user manually modifies the static computational graph, to ensure successful conversion. It can be learned that, when remote inference is performed by using the deep learning framework, the dynamic computational graph cannot be directly converted into the static computational graph in many scenarios, which easily causes a technical problem of low efficiency of remote inference on computational graphs.

To resolve the foregoing problem, an embodiment of this application provides a computational graph inference method. By converting an original-type computational graph into a corresponding target-type computational graph, when the conversion fails, the original-type computational graph may be divided into first-level original-type computational subgraphs. Because the first-level original-type computational subgraph may be further divided into operators defined according to a deep learning framework, and the operator defined according to the deep learning framework can definitely be converted into the target-type computational graph, conversion is performed after the original-type computational graph is divided, to improve a success rate of conversion. After the first-level original-type computational subgraph is converted into at least one corresponding target-type computational graph, a to-be-inferred file may be generated by using the target-type computational graph corresponding to the first-level original-type computational subgraph, and the to-be-inferred file is sent to a remote device through a network, so that the remote device performs an inference operation based on the to-be-inferred file, to obtain an inference result. In this way, any dynamic computational graph can be converted into a static computational graph, to generate a to-be-inferred file for inference without manually modifying the static computational graph. An operation manner is simple, and an objective of converting any dynamic computational graph into the static computational graph for inference is achieved, thereby achieving a technical effect of improving inference efficiency of computational graphs, and further resolving the technical problem of low inference efficiency of computational graphs.

The following describes inference of a computational graph.

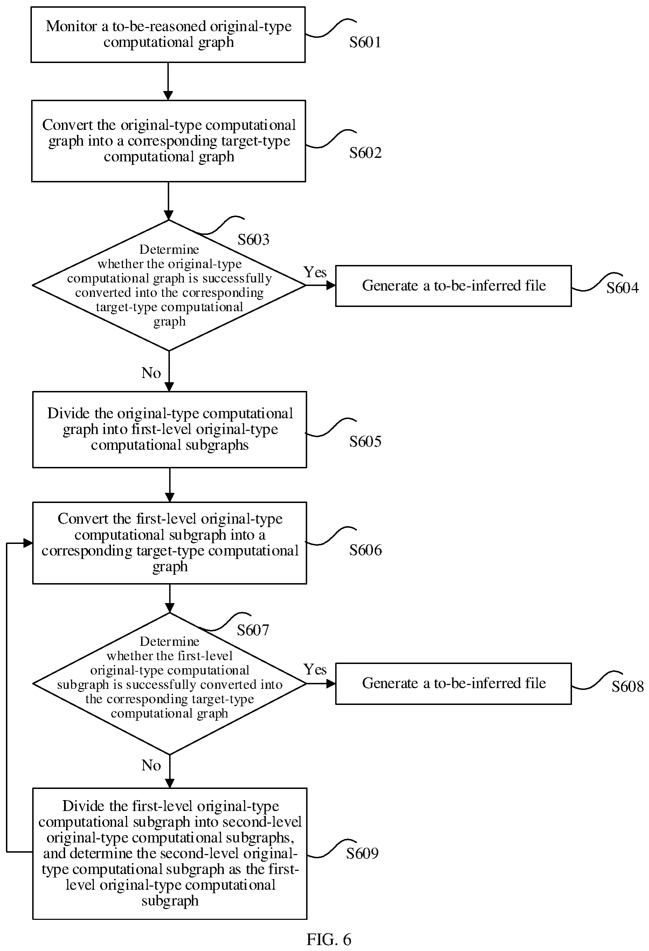

FIG. 6 is a flowchart of another computational graph inference method according to an embodiment of this application. As shown in FIG. 6, first, a to-be-inferred original-type computational graph is monitored, the original-type computational graph is converted into a corresponding target-type computational graph based on an interface provided by a deep learning framework, and then whether the original-type computational graph is successfully converted into the corresponding target-type computational graph is determined. When the original-type computational graph is successfully converted into the corresponding target-type computational graph, a to-be-inferred file is directly generated by using the target-type computational graph, and when the original-type computational graph fails to be converted into the target-type computational graph, the original-type computational graph may be divided into first-level original-type computational subgraphs based on a format corresponding to the deep learning framework. The first-level original-type computational subgraph also satisfies the format corresponding to the deep learning framework. Subsequently, all the first-level original-type computational subgraphs are converted into corresponding target-type computational graphs based on the interface provided by the deep learning framework, and whether the first-level original-type computational subgraph is successfully converted into the corresponding target-type computational graph is determined. When the first-level original-type computational subgraph is successfully converted into the corresponding target-type computational graph, the to-be-inferred file is directly generated by using the target-type computational graph; when the first-level original-type computational subgraph fails to be converted into the corresponding target-type computational graph, all the first-level original-type computational subgraphs may be further converted into second-level original-type computational subgraphs based on the format corresponding to the deep learning framework, and the second-level original-type computational subgraphs are determined as first-level original-type computational subgraphs, and the process returns to the conversion step. In other words, the first-level original-type computational subgraph may be converted into the corresponding target-type computational graph in a recursive manner in which the first-level original-type computational subgraph is divided into second-level original-type computational subgraphs, until the second-level original-type computational graph can be converted into the corresponding target-type computational graph. Finally, a to-be-inferred file can be generated.

FIG. 5 is a schematic diagram of a computational graph inference method according to an embodiment of this application. As shown in FIG. 5, when a monitored dynamic computational graph cannot be directly converted into a static computational graph, the dynamic computational graph may be divided, based on a format corresponding to a deep learning framework, into a dynamic computational subgraph 1, a dynamic computational subgraph 2, and a dynamic computational subgraph 3. The dynamic computational subgraph 3 may be directly converted into a corresponding static computational subgraph 3'. The dynamic computational subgraph 1 and the dynamic computational subgraph 2 cannot be directly converted into corresponding static computational subgraphs. Therefore, the dynamic computational subgraph 1 is divided into a dynamic computational subgraph 11 and a dynamic computational subgraph 12. The dynamic computational subgraph 11 and the dynamic computational subgraph 12 can be directly converted into a corresponding static computational subgraph 11' and a corresponding static computational subgraph 12'. Subsequently, the dynamic computational subgraph 2 is divided into a dynamic computational subgraph 21 and a dynamic computational subgraph 22. The dynamic computational subgraph 21 can be directly converted into a corresponding static computational subgraph 21', and the dynamic computational subgraph 22 cannot be directly converted into a corresponding static computational subgraph. Therefore, the dynamic computational subgraph 22 is divided into a dynamic computational subgraph 221 and a dynamic computational subgraph 222. The dynamic computational subgraph 221 and the dynamic computational subgraph 222 can be directly converted into a corresponding static computational subgraph 221' and a corresponding static computational subgraph 222'. Finally, the dynamic computational graph can be divided into 6 dynamic computational subgraphs layer by layer in a recursive manner, so that the 6 dynamic computational subgraphs can be converted into 6 static computational subgraphs. Further, 6 model files can be generated by using the 6 static computational subgraphs obtained through conversion and sent to a remote computer, so that the remote computer traverses the model files according to a sequence and performs inference, to obtain an inference result.

It should be noted that, the implementation solution involved in the foregoing embodiment of this application is the same as the solution, the application scenario, and the implementation process that are provided by Embodiment 1, but is not limited to the solution provided by Embodiment 1.

### Embodiment 3

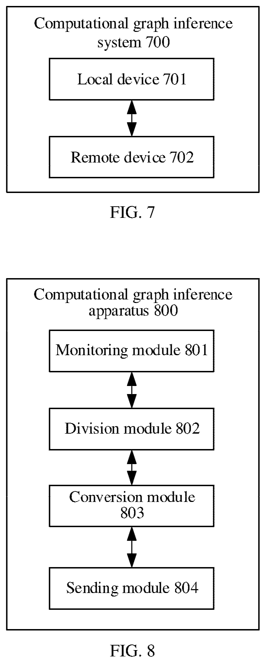

According to the embodiments of this application, a computational graph inference system is further provided. As shown in FIG. 7, the computational graph inference system includes: a local device 701, configured to: monitor a to-be-inferred original-type computational graph, where the original-type computational graph is a computational graph constructed and computed in a same time period; in response to a failure in converting the monitored original-type computational graph into a corresponding target-type computational graph, divide the original-type computational graph into first-level original-type computational subgraphs, where the target-type computational graph is a computational graph respectively constructed and computed in different time periods; convert the first-level original-type computational subgraph into at least one corresponding target-type computational graph; and generate a to-be-inferred file by using the target-type computational graph corresponding to the first-level original-type computational subgraph; and a remote device 702, configured to: obtain the to-be-inferred file, and perform inference on the to-be-inferred file, to obtain an inference result.

In this embodiment, the to-be-inferred original-type computational graph may be monitored by using the local device. The original-type computational graph is a computational graph constructed and computed in a same time period. For example, the original-type computational graph may be a dynamic computational graph, which may be referred to as a dynamic graph.

In an implementation, after the to-be-inferred computational graph of the original-type is monitored by using the local device, the original-type computational graph may be directly converted into a target-type computational graph by using an API provided by a deep learning framework. The target-type computational graph may be a static computational graph.

In this embodiment, after the to-be-inferred original-type computational graph is monitored by using the local device, type conversion may be performed on the original-type computational graph monitored by using the local device. For example, type conversion from a dynamic computational graph to a static computational graph is performed on the original-type computational graph monitored by using the local device. In response to the failure in converting the original-type computational graph monitored by using the local device into the corresponding target-type computational graph, the original-type computational graph may be divided into the first-level original-type computational subgraphs.

In this embodiment, in many scenarios, the original-type computational graph cannot be directly converted into the target-type computational graph. For example, the original-type computational graph includes syntax specific to a computer programming language, namely, python, that can simply and effectively perform object-oriented programming, or input and output of the original-type computational graph do not belong to a type that can be supported by the deep learning framework. Therefore, in this case, an exception is automatically thrown by the API provided by the deep learning framework in the process of converting the original-type computational graph into the target-type computational graph. When it is detected that the API provided by the deep learning framework throws an exception, in other words, in response to the failure in converting the original-type computational graph into the corresponding target-type computational graph, then, the original-type computational graph may be divided into the first-level original-type computational subgraphs for conversion.

In an implementation, the target-type computational graph is a computational graph constructed and computed in different time periods, and may be a static computational graph, which may also be referred to as a static graph. Because the original-type computational graph may be a dynamic computational graph, the first-level original-type computational subgraph may be a first-level dynamic computational subgraph obtained by dividing the dynamic computational graph.

In an implementation, if the original-type computational graph satisfies a standard format of the deep learning framework, a type and a quantity of first-level original-type computational subgraphs obtained by dividing the original-type computational graph are determined. For example, if the original-type computational graph satisfies the standard format of the deep learning framework, first-level original-type computational subgraphs obtained by dividing the original-type computational graph may be a dynamic computational subgraph 1, a dynamic computational subgraph 2, and a dynamic computational subgraph 3 shown in FIG. 5. The example herein is merely exemplary, and does not constitute a limitation on the embodiments of this application.

In this embodiment, the first-level original-type computational subgraph may be converted in the local device into at least one corresponding target-type computational graph. For example, a dynamic computational subgraph may be converted in the local device into at least one corresponding static computational subgraph.

For example, as can be learned from the foregoing descriptions, the first-level original-type computational subgraph may be a first-level dynamic computational subgraph, and the target-type computational graph may be a static computational graph. Based on this, converting the first-level original-type computational subgraph into at least one corresponding target-type computational graph means converting the first-level dynamic computational subgraph into at least one corresponding static computational subgraph. If the first-level original-type computational subgraphs include the dynamic computational subgraph 1, the dynamic computational subgraph 2, and the dynamic computational subgraph 3 as shown in FIG. 5, the dynamic computational subgraph 3 may be converted into a corresponding static computational subgraph 3'.

In this embodiment, after converting the first-level original-type computational subgraph into the at least one corresponding target-type computational graph, the local device may generate a to-be-inferred file by using the target-type computational graph corresponding to the first-level original-type computational subgraph. The to-be-inferred file may be a model file. For example, the model file may be binary data.

In this embodiment, after the local device generates the to-be-inferred file by using the target-type computational graph corresponding to the first-level original-type computational subgraph, the remote device may obtain the to-be-inferred file based on the network, and perform inference on the to-be-inferred file, to obtain the inference result.

In an implementation, the local device 701 is further configured to send the to-be-inferred file to the remote device based on a deep learning framework.

In the embodiment, the local device 701 may further send the to-be-inferred file to the remote device based on the deep learning framework, so that the remote device loads the to-be-inferred file to perform the inference operation, to obtain the inference result.

In an implementation, the local device 701 is further configured to send an inference request to the remote device based on a deep learning framework, and the remote device is configured to perform inference on an inference file in response to the inference request, to obtain the inference result.

In this embodiment, the local device 701 may further send the inference request to the remote device based on the deep learning framework. After receiving the inference request, the remote device may perform the inference operation on the inference file in response to the inference request, to obtain the inference result.

Based on the solution in the foregoing embodiment, by converting the original-type computational graph into the corresponding target-type computational graph in the local device, when the conversion fails, the original-type computational graph may be divided into first-level original-type computational subgraphs. Because the first-level original-type computational subgraph may be further divided into operators defined according to the deep learning framework, and the operator defined according to the deep learning framework can definitely be converted into the target-type computational graph, the original-type computational graph is divided into the first-level original-type computational subgraphs, to improve a success rate of conversion. After the first-level original-type computational subgraph is converted into at least one corresponding target-type computational graph, a to-be-inferred file may be generated by using the target-type computational graph corresponding to the first-level original-type computational subgraph, and the to-be-inferred file is sent to a remote device through a network, so that the remote device performs an inference operation based on the to-be-inferred file, to obtain an inference result. In this way, any dynamic computational graph can be converted into a static computational graph, to generate a to-be-inferred file for inference without manually modifying the static computational graph. An operation manner is simple, and an objective of converting any dynamic computational graph into the static computational graph for inference is achieved, thereby achieving a technical effect of improving inference efficiency of computational graphs, and further resolving the technical problem of low inference efficiency of computational graphs.

### Embodiment 4

According to an embodiment of this application, a computational graph inference apparatus for implementing the computational graph inference method shown in FIG. 4 is further provided.

FIG. 8 is a structural block diagram of a computational graph inference apparatus according to an embodiment of this application. As shown in FIG. 8, the computational graph inference apparatus may include: a monitoring module 801, a division module 802, a conversion module 803, and a sending module 804.

The monitoring module 801 is configured to monitor a to-be-inferred original-type computational graph, where the original-type computational graph is a computational graph constructed and computed in a same time period.

The division module 802 is configured to: in response to a failure in converting the monitored original-type computational graph into a corresponding target-type computational graph, divide the original-type computational graph into first-level original-type computational subgraphs, where the target-type computational graph is a computational graph respectively constructed and computed in different time periods.

The conversion module 803 is configured to convert the first-level original-type computational subgraph into at least one corresponding target-type computational graph.

The sending module 804 is configured to: generate a to-be-inferred file by using the target-type computational graph corresponding to the first-level original-type computational subgraph, and send the to-be-inferred file to a remote device, where the to-be-inferred file is a file provided to the remote device for inference.

In an implementation, that the conversion module 803 is further configured to convert the first-level original-type computational subgraph into at least one corresponding target-type computational graph includes: perform at least one level of type conversion on the first-level original-type computational subgraph, to obtain the at least one corresponding target-type computational graph.

In an implementation, that the conversion module 803 is further configured to perform at least one level of type conversion on the first-level original-type computational subgraph, to obtain at least one corresponding target-type computational graph includes: a conversion step of performing type conversion on the first-level original-type computational subgraph; a determining step of determining whether the first-level original-type computational subgraph is successfully converted into the corresponding target-type computational graph; a division step of, in response to a failure in converting the first-level original-type computational subgraph into the corresponding target-type computational graph, dividing the first-level original-type computational subgraph into second-level original-type computational subgraphs, and determining the second-level original-type computational subgraph as the first-level original-type computational subgraph, and returning to the conversion step; and an obtaining step of, in response to a success in converting the first-level original-type computational subgraph into the corresponding target-type computational graph, obtaining the target-type computational graph corresponding to the first-level original-type computational subgraph.

In an implementation, the conversion module 803 is further configured to: in response to the second-level original-type computational subgraph being the target operator, obtain the target-type computational graph that the target operator is successfully converted into, and stop performing the following step: determining the second-level original-type computational subgraph as the first-level original-type computational subgraph.

In an implementation, the conversion module 803 is further configured to construct the target operator based on a deep learning framework, where the deep learning framework is used for converting the target operator into the corresponding target-type computational graph.

In an implementation, that the conversion module 803 is further configured to convert the first-level original-type computational subgraph into at least one corresponding target-type computational graph includes: converting the first-level original-type computational subgraph into at least one corresponding target-type computational graph based on an interface provided by the deep learning framework.

In an implementation, the conversion module 803 is further configured to convert the original-type computational graph into the corresponding target-type computational graph based on the interface provided by the deep learning framework.

In an implementation, the computational graph inference apparatus further includes a determining module 805, configured to: determine, based on exception prompt information outputted by the deep learning framework, that the converting the monitored original-type computational graph into the corresponding target-type computational graph fails.

In an implementation, that the division module 802 is further configured to divide the original-type computational graph into first-level original-type computational subgraphs includes: dividing the original-type computational graph into the first-level original-type computational subgraphs based on a format corresponding to the deep learning framework, where the original-type computational graph and the first-level original-type computational subgraphs satisfy the format corresponding to the deep learning framework.

In an implementation, the computational graph inference apparatus further includes a generation module 806, configured to: in response to a success in converting the monitored original-type computational graph into the corresponding target-type computational graph, generate the to-be-inferred file by using the target-type computational graph subjected to conversion.

Herein, it should be noted that, the monitoring module 801, the division module 802, the conversion module 803, and the sending module 804 correspond to step S401 to step S404 in Embodiment 1. It should be noted that, the foregoing module or unit may be a hardware component or a software component that is stored in a memory and processed by one or more processors, or the foregoing modules may be used as a part of the apparatus and may run in the device provided in Embodiment 1.

### Embodiment 5

An embodiment of this application may provide a computer terminal, and the computer terminal may be any computer terminal device in a computer terminal group. In this embodiment, the foregoing computer terminal may be replaced with a terminal device such as a mobile terminal.

In this embodiment, the foregoing computer terminal may be located in at least one of a plurality of network devices in a computer network.

In this embodiment, the foregoing computer terminal may execute program codes of the following steps in the computational graph inference method: monitoring a to-be-inferred original-type computational graph, where the original-type computational graph is a computational graph constructed and computed in a same time period; in response to a failure in converting the monitored original-type computational graph into a corresponding target-type computational graph, dividing the original-type computational graph into first-level original-type computational subgraphs, where the target-type computational graph is a computational graph respectively constructed and computed in different time periods; converting the first-level original-type computational subgraph into at least one corresponding target-type computational graph; and generating a to-be-inferred file by using the target-type computational graph corresponding to the first-level original-type computational subgraph, and sending the to-be-inferred file to a remote device, where the to-be-inferred file is a file provided to the remote device for inference.

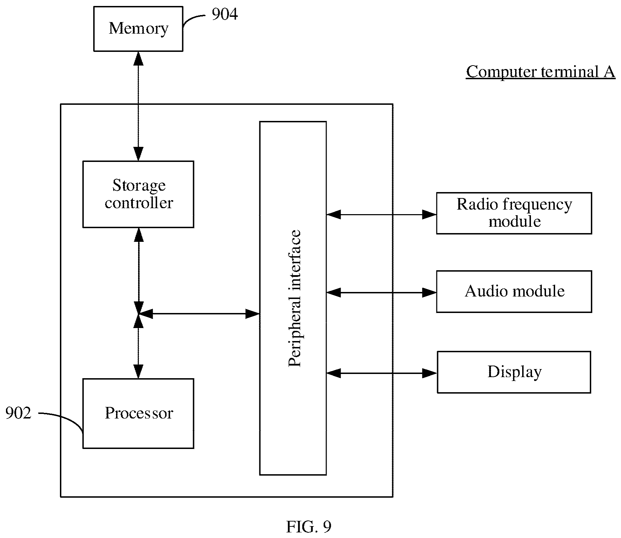

FIG. 9 is a structural block diagram of a computer terminal according to an embodiment of this application. As shown in FIG. 9, the computer terminal A may include: one or more (only one is shown in the figure) processors 902, a memory 904, a storage controller, and a peripheral interface. The peripheral interface is connected to a radio frequency module, an audio module, and a display.

The memory may be configured to store a software program and a module, for example, the program instructions/module corresponding to the computational graph inference method in this embodiment of this application. The processor runs the software program and module stored in the memory, to implement various functional applications and data processing, to be specific, the foregoing computational graph inference method. The memory may include a high-speed random memory, and may also include a non-volatile memory, for example, one or more magnetic storage apparatuses, a flash memory, or another non-volatile solid-state memory. In some embodiments, the memory may include memories remotely disposed relative to the processor, and the remote memories may be connected to a terminal A through a network. Examples of the network include, but are not limited to, the Internet, an intranet, a local area network, a mobile communication network, and a combination thereof.

The processor may perform the following steps by calling, by using a transmission apparatus, information and application programs stored in the memory: monitoring a to-be-inferred original-type computational graph, where the original-type computational graph is a computational graph constructed and computed in a same time period; in response to a failure in converting the monitored original-type computational graph into a corresponding target-type computational graph, dividing the original-type computational graph into first-level original-type computational subgraphs, where the target-type computational graph is a computational graph respectively constructed and computed in different time periods; converting the first-level original-type computational subgraph into at least one corresponding target-type computational graph; and generating a to-be-inferred file by using the target-type computational graph corresponding to the first-level original-type computational subgraph, and sending the to-be-inferred file to a remote device through a network, where the to-be-inferred file is a file provided to the remote device for inference.

In an implementation, the processor may further execute program codes of the following step: performing at least one level of type conversion on the first-level original-type computational subgraph, to obtain the at least one corresponding target-type computational graph.

In an implementation, the processor may further execute program codes of the following step: a conversion step of performing type conversion on the first-level original-type computational subgraph; a determining step of determining whether the first-level original-type computational subgraph is successfully converted into the corresponding target-type computational graph; a division step of, in response to a failure in converting the first-level original-type computational subgraph into the corresponding target-type computational graph, dividing the first-level original-type computational subgraph into second-level original-type computational subgraphs, and determining the second-level original-type computational subgraph as the first-level original-type computational subgraph, and returning to the conversion step; and an obtaining step of, in response to a success in converting the first-level original-type computational subgraph into the corresponding target-type computational graph, obtaining the target-type computational graph corresponding to the first-level original-type computational subgraph.

In an implementation, the processor may further execute program codes of the following step: in response to the second-level original-type computational subgraph being the target operator, obtaining the target-type computational graph that the target operator is successfully converted into, and stopping performing the following step: determining the second-level original-type computational subgraph as the first-level original-type computational subgraph.

In an implementation, the processor may further execute program codes of the following step: constructing the target operator based on a deep learning framework, where the deep learning framework is used for converting the target operator into the corresponding target-type computational graph.

In an implementation, the processor may further execute program codes of the following step: converting the first-level original-type computational subgraph into at least one corresponding target-type computational graph based on an interface provided by the deep learning framework.

In an implementation, the processor may further execute program codes of the following step: converting the original-type computational graph into the corresponding target-type computational graph based on the interface provided by the deep learning framework.

In an implementation, the processor may further execute program codes of the following step: determining, based on exception prompt information outputted by the deep learning framework, that the converting the monitored original-type computational graph into the corresponding target-type computational graph fails.

In an implementation, the processor may further execute program codes of the following step: dividing the original-type computational graph into the first-level original-type computational subgraphs based on a format corresponding to the deep learning framework, where the original-type computational graph and the first-level original-type computational subgraphs satisfy the format corresponding to the deep learning framework.

In an implementation, the processor may further execute program codes of the following step: in response to a success in converting the monitored original-type computational graph into the corresponding target-type computational graph, generating the to-be-inferred file by using the target-type computational graph subjected to conversion.

According to the embodiments of this application, a computational graph inference solution is provided. By converting the original-type computational graph into the corresponding target-type computational graph, when the conversion fails, the original-type computational graph may be divided into first-level original-type computational subgraphs. Because the first-level original-type computational subgraph may be further divided into operators defined according to the deep learning framework, and the operator defined according to the deep learning framework can definitely be converted into the target-type computational graph, conversion is performed after the original-type computational graph is divided, to improve a success rate of conversion. After the first-level original-type computational subgraph is converted into at least one corresponding target-type computational graph, a to-be-inferred file may be generated by using the target-type computational graph corresponding to the first-level original-type computational subgraph, and the to-be-inferred file is sent to a remote device through a network, so that the remote device performs inference on the to-be-inferred file, to obtain an inference result. In this way, any dynamic computational graph can be converted into a static computational graph, to generate a to-be-inferred file for inference without manually modifying the static computational graph. An operation manner is simple, and an objective of converting any dynamic computational graph into the static computational graph for inference is achieved, thereby achieving a technical effect of improving inference efficiency of computational graphs, and further resolving the technical problem of low inference efficiency of computational graphs.

A person of ordinary skill in the art may understand that the structure shown in FIG. 9 is merely an example, and the computer terminal may be a terminal device such as a smartphone (for example, an Android mobile phone and an iPhone operating system (iOS) mobile phone), a tablet computer, a palmtop computer, a mobile Internet device (MID), and a notebook computer (PAD). FIG. 9 does not constitute a limitation on a structure of the foregoing electronic apparatus. For example, the computer terminal A may further include more or less components (for example, a network interface and a display apparatus) than those shown in FIG. 9, or have configuration different from that shown in FIG. 9.

A person of ordinary skill in the art may understand that all or some of the steps of the methods in the foregoing embodiments may be implemented by a program instructing relevant hardware of the terminal device. The program may be stored in a computer-readable storage medium. The storage medium may include a flash disk, a read-only memory (ROM), a random access memory (RAM), a magnetic disk, an optical disc, and the like.

### Embodiment 6

An embodiment of this application further provides a computer-readable storage medium. In this embodiment, the computer-readable storage medium may be configured to store program code executed in the computational graph inference method provided in Embodiment 1.

In this embodiment, the computer-readable storage medium may be located in any computer terminal in a computer terminal cluster in a computer network, or in any mobile terminal in a mobile terminal cluster.

In this embodiment, the computer-readable storage medium is configured to store program codes for performing the following steps: monitoring a to-be-inferred original-type computational graph, where the original-type computational graph is a computational graph constructed and computed in a same time period; in response to a failure in converting the monitored original-type computational graph into a corresponding target-type computational graph, dividing the original-type computational graph into first-level original-type computational subgraphs, where the target-type computational graph is a computational graph respectively constructed and computed in different time periods; converting the first-level original-type computational subgraph into at least one corresponding target-type computational graph; and generating a to-be-inferred file by using the target-type computational graph corresponding to the first-level original-type computational subgraph, and sending the to-be-inferred file to a remote device, where the to-be-inferred file is a file provided to the remote device for inference.

In this embodiment, the computer-readable storage medium is configured to store program codes for performing the following step: performing at least one level of type conversion on the first-level original-type computational subgraph, to obtain the at least one corresponding target-type computational graph.

In this embodiment, the computer-readable storage medium is configured to store program codes for performing the following steps: a conversion step of performing type conversion on the first-level original-type computational subgraph; a determining step of determining whether the first-level original-type computational subgraph is successfully converted into the corresponding target-type computational graph; a division step of, in response to a failure in converting the first-level original-type computational subgraph into the corresponding target-type computational graph, dividing the first-level original-type computational subgraph into second-level original-type computational subgraphs, and determining the second-level original-type computational subgraph as the first-level original-type computational subgraph, and returning to the conversion step; and an obtaining step of, in response to a success in converting the first-level original-type computational subgraph into the corresponding target-type computational graph, obtaining the target-type computational graph corresponding to the first-level original-type computational subgraph.

In this embodiment, the computer-readable storage medium is configured to store program codes for performing the following steps: in response to the second-level original-type computational subgraph being the target operator, obtaining the corresponding target-type computational graph that the target operator is successfully converted into, and stopping performing the following step: determining the second-level original-type computational subgraph as the first-level original-type computational subgraph.

In this embodiment, the computer-readable storage medium is configured to store program codes for performing the following step: constructing the target operator based on a deep learning framework, where the deep learning framework is used for converting the target operator into the corresponding target-type computational graph.

In this embodiment, the computer-readable storage medium is configured to store program codes for performing the following step: converting the first-level original-type computational subgraph into at least one corresponding target-type computational graph based on an interface provided by the deep learning framework.

In this embodiment, the computer-readable storage medium is configured to store program codes for performing the following step: converting the original-type computational graph into the corresponding target-type computational graph based on the interface provided by the deep learning framework.

In this embodiment, the computer-readable storage medium is configured to store program codes for performing the following step: determining, based on exception prompt information outputted by the deep learning framework, that the converting the monitored original-type computational graph into the corresponding target-type computational graph fails.

In this embodiment, the computer-readable storage medium is configured to store program codes for performing the following step: dividing the original-type computational graph into the first-level original-type computational subgraphs based on a format corresponding to the deep learning framework, where the original-type computational graph and the first-level original-type computational subgraphs satisfy the format corresponding to the deep learning framework.

In this embodiment, the computer-readable storage medium is configured to store program codes for performing the following step: in response to a success in converting the monitored original-type computational graph into the corresponding target-type computational graph, generating the to-be-inferred file by using the target-type computational graph subjected to conversion.

In this embodiment of this application, when converting the original-type computational graph, and when the converting the original-type computational graph into the corresponding target-type computational graph fails, the original-type computational graph may be divided into first-level original-type computational subgraphs; further, the first-level original-type computational subgraph is converted into at least one corresponding target-type computational graph; and finally, a to-be-inferred file is generated by using the target-type computational graph corresponding to the first-level original-type computational subgraph, and the to-be-inferred file is sent to a remote device, so that the remote device performs the inference operation based on the to-be-inferred file. In other words, in this embodiment of this application, when conversion of an original-type computational graph into a corresponding target-type computational graph fails, the original-type computational graph may be divided into original-type computational subgraphs. The original-type computational subgraph is further converted, and conversion is recursively performed in this way, until the target-type computational graph is successfully obtained through conversion. In this way, any original-type computational graph can be converted into a target-type computational graph without manually modifying the original-type computational graph, and the operation manner is simple, so that an objective of converting any original-type computational graph into the target-type computational graph for inference is achieved, thereby achieving a technical effect of improving inference efficiency of computational graphs, and further, the technical problem of low inference efficiency of computational graph is resolved.

The sequence numbers in the foregoing embodiments of this application are merely for description purposes, and do not indicate the preference of the embodiments.

In the foregoing embodiments of this application, the descriptions of the embodiments have respective focuses. For a part that is not described in detail in an embodiment, refer to related descriptions in other embodiments.

In the several embodiments provided in this application, it should be understood that the disclosed technical content may be implemented in other manners. The described apparatus embodiments are merely exemplary. For example, the unit division is merely logical function division and may be other division during actual implementation. For example, a plurality of units or components may be combined or integrated into another system, or some features may be ignored or not performed. In addition, the coupling, or direct coupling, or communication connection between the displayed or discussed components may be indirect coupling or communication connection by means of some interfaces, units, or modules, and may be electrical or of other forms.

The units described as separate components may or may not be physically separated, and the components displayed as units may or may not be physical units, and may be located in one place or may be distributed over a plurality of network units. Some or all of the units may be selected according to actual needs to achieve the objectives of the solutions of the embodiments.

In addition, functional units in the embodiments of this application may be integrated into one processing unit, or each of the units may be physically separated, or two or more units may be integrated into one unit. The integrated unit may be implemented in the form of hardware, or may be implemented in the form of a software functional unit.

When the integrated unit is implemented in the form of a software functional unit and sold or used as an independent product, the integrated unit may be stored in a computer-readable storage medium. Based on such an understanding, the technical solutions of this application essentially, or a part contributing to the related art, or all or a part of the technical solution may be implemented in the form of a software product. The computer software product is stored in a storage medium, and includes several instructions for instructing one computer device (which may be a personal computer, a server, a network device, or the like) to perform all or some of steps of the methods in the embodiments of this application. The foregoing storage medium includes: various media such as a USB flash drive, a read-only memory (ROM), a random access memory (RAM), a removable hard disk, a magnetic disk, or an optical disc that can store program code.

The foregoing descriptions are some implementations of this application. It should be noted that, a person of ordinary skill in the art may make several improvements and refinements without departing from the principle of this application, and the improvements and refinements shall fall within the protection scope of this application.

## Claims

1. A computational graph inference method, comprising:
monitoring a to-be-inferred original-type computational graph, wherein the original-type computational graph is a computational graph constructed and computed in a same time period;
in response to a failure in converting the monitored original-type computational graph into a corresponding target-type computational graph, dividing the original-type computational graph into first-level original-type computational subgraphs, wherein the target-type computational graph is a computational graph respectively constructed and computed in different time periods;
converting the first-level original-type computational subgraph into at least one corresponding target-type computational graph; and
generating a to-be-inferred file by using the target-type computational graph corresponding to the first-level original-type computational subgraph, and sending the to-be-inferred file to a remote device, wherein the to-be-inferred file is a file provided to the remote device for inference.

2. The method according to claim 1, wherein the converting the first-level original-type computational subgraph into at least one corresponding target-type computational graph comprises:
performing at least one level of type conversion on the first-level original-type computational subgraph, to obtain the at least one corresponding target-type computational graph.

3. The method according to claim 2, wherein the performing at least one level of type conversion on the first-level original-type computational subgraph, to obtain the at least one corresponding target-type computational graph comprises:
a conversion step of performing type conversion on the first-level original-type computational subgraph;
a determining step of determining whether the first-level original-type computational subgraph is successfully converted into the corresponding target-type computational graph;
a division step of, in response to a failure in converting the first-level original-type computational subgraph into the corresponding target-type computational graph, dividing the first-level original-type computational subgraph into second-level original-type computational subgraphs, and determining the second-level original-type computational subgraph as the first-level original-type computational subgraph, and returning to the conversion step; and
an obtaining step of, in response to a success in converting the first-level original-type computational subgraph into the corresponding target-type computational graph, obtaining the target-type computational graph corresponding to the first-level original-type computational subgraph.

4. The method according to claim 3, wherein the original-type computational graph is established by using a target operator, the target operator is used for successful conversion into the corresponding target-type computational graph, and after the dividing the first-level original-type computational subgraph into second-level original-type computational subgraphs, the method further comprises:
in response to the second-level original-type computational subgraph being the target operator, obtaining the target-type computational graph that the target operator is successfully converted into, and stopping performing the following step: determining the second-level original-type computational subgraph as the first-level original-type computational subgraph.

5. The method according to claim 4, wherein the method further comprises:
constructing the target operator based on a deep learning framework, wherein the deep learning framework is used for converting the target operator into the corresponding target-type computational graph.

6. The method according to claim 1, wherein the converting the first-level original-type computational subgraph into at least one corresponding target-type computational graph comprises:
converting the first-level original-type computational subgraph into at least one corresponding target-type computational graph based on an interface provided by the deep learning framework.

7. The method according to claim 1, wherein the method further comprises:
converting the original-type computational graph into the corresponding target-type computational graph based on the interface provided by the deep learning framework.

8. The method according to claim 1, wherein the method further comprises:
determining, based on exception prompt information outputted by the deep learning framework, that the converting the monitored original-type computational graph into the corresponding target-type computational graph fails.

9. The method according to claim 1, wherein the dividing the original-type computational graph into first-level original-type computational subgraphs comprises:
dividing the original-type computational graph into the first-level original-type computational subgraphs based on a format corresponding to the deep learning framework, wherein the original-type computational graph and the first-level original-type computational subgraphs satisfy the format corresponding to the deep learning framework.

10. The method according to any one of claims 1 to 9, wherein the method further comprises:
in response to a success in converting the monitored original-type computational graph into the corresponding target-type computational graph, generating the to-be-inferred file by using the target-type computational graph subjected to conversion.

11. A computational graph inference system, comprising:
a local device, configured to: monitor a to-be-inferred original-type computational graph, wherein the original-type computational graph is a computational graph constructed and computed in a same time period; in response to a failure in converting the monitored original-type computational graph into a corresponding target-type computational graph, divide the original-type computational graph into first-level original-type computational subgraphs, wherein the target-type computational graph is a computational graph respectively constructed and computed in different time periods; convert the first-level original-type computational subgraph into at least one corresponding target-type computational graph; and generate a to-be-inferred file by using the target-type computational graph corresponding to the first-level original-type computational subgraph; and
a remote device, configured to: obtain the to-be-inferred file, and perform inference on the to-be-inferred file, to obtain an inference result.

12. The system according to claim 11, wherein the local device is configured to send the to-be-inferred file to the remote device based on a deep learning framework.

13. The system according to claim 11, wherein the local device is configured to send an inference request to the remote device based on a deep learning framework, and the remote device is configured to perform inference on the inference file in response to the inference request, to obtain the inference result.

14. A computer-readable storage medium, wherein the computer-readable storage medium comprises a stored program, and the program, when run by a processor, controls a device on which the computer-readable storage medium is disposed to perform the method according to any one of claims 1 to 10.
